# EUROPÄISCHE PATENTSCHRIFT

(11) **EP 1 922 542 B1**
(45) Veröffentlichungstag und Bekanntmachung des Hinweises auf die Patenterteilung: **30.03.2016**
(21) Anmeldenummer: 06793333.3
(22) Anmeldetag: 07.09.2006
(51) Int. Cl.: G01N 29/02, B01F 11/02, F04B 19/00

(54) **Vorrichtung und Verfahren zur Bewegung einer Flüssigkeit und zur Detektion einer Substanz in der Flüssigkeit mittels piezoelektrischer Transducer**
Apparatus and method for moving a liquid and for detection of a substance in the liquid by means of piezoelectric transducers
Appareil et procédé pour déplacer un liquide et pour détecter une substance dans le liquide au moyen des transducteurs piézoélectriques

(30) Priorität: 09.09.2005 DE 102005043034
(43) Veröffentlichungstag der Anmeldung: 21.05.2008
(73) Patentinhaber: Siemens Aktiengesellschaft, 80333 München (DE)
(72) Erfinder: GABL, Reinhard, A-8542 St. Peter Im Sulmtal (AT); LINK, Mathias, 80801 München (DE); SCHREITER, Mattias, 81379 München (DE); WEBER, Jan, 81667 München (DE)
(86) Internationale Anmeldenummer: PCT/EP2006/066139
(87) Internationale Veröffentlichungsnummer: WO 2007/028820

(56) Entgegenhaltungen:
- WO-A1-2004/102203
- US-A- 5 006 749
- US-A- 5 674 742
- KIM E S ET AL: "Microfluidic motion generation with acoustic waves" SENSORS AND ACTUATORS A, ELSEVIER SEQUOIA S.A., LAUSANNE, CH, Bd. 66, Nr. 1-3, 1. April 1998 (1998-04-01), Seiten 355-360, XP004144012 ISSN: 0924-4247
- VIVEK V ET AL: "Novel acoustic-wave micromixer" PROC IEEE MICRO ELECTRO MECH SYST MEMS; PROCEEDINGS OF THE IEEE MICRO ELECTRO MECHANICAL SYSTEMS (MEMS), 23. Januar 2000 (2000-01-23), Seiten 668-673, XP010377208 Piscataway, NJ, USA

## Beschreibung

Die Erfindung betrifft eine Vorrichtung mit einer Einrichtung zur Bewegung einer Flüssigkeit sowie ein Verfahren zum Bewegen einer Flüssigkeit unter Verwendung einer solchen Vorrichtung.

Mikrofluidik-Systeme, die beispielsweise als Biosensoren Verwendung finden, erfordern aufgrund ihrer Baugröße und des verhältnismäßig kleinen zur Verfügung stehenden Flüssigkeitsvolumens ein System von Mikrokanälen mit kleinen Querschnitten. Aufgrund dieser kleinen Querschnitte und der relativ geringen Flussgeschwindigkeiten sind die Reynolds-Zahlen derartiger Systeme, die das Verhältnis von Trägheitszu Zähigkeitskräften charakterisieren und für eine ideale Flüssigkeit ohne Viskosität unendlich groß sind, sehr klein. Hieraus folgt, dass die Strömungen in diesen Kanälen überwiegend laminar sind und infolge dessen keine ausreichende Vermischung stattfindet.

Eine solche Durchmischung ist beispielsweise bei Biosensoren notwendig, um die Polymerasekettenreaktion (PCR) zu beschleunigen oder auch die Hybridisierung von DNA zu bewirken, da es sich in beiden Fällen um diffusionslimitierte Prozesse handelt.

Zur Lösung dieser Probleme ist in jüngster Zeit ein Oberflächenwellenresonator auf Basis eines Lithium-Niobat-Chips vorgeschlagen worden, der mit einer HF-Leistung bis zu 500 mW bei 140 MHz arbeitet. Hierdurch wird eine quasichaotische Vermischung der Flüssigkeit erzeugt, wodurch beispielsweise die Hybridisierung in wenigen Minuten ablaufen kann.

Derartige Lösungen sind jedoch häufig in Bezug auf Baugröße und Frequenzbereich limitiert.

Aus der US 5 674 742 A ist eine integrierte Mikrofluidikvorrichtung bekannt, welche eine erstes piezoakustisches Element zum Bewegen einer Flüssigkeit und ein weiteres piezoakustisches Elemente zum Detektieren von Substanzen in der Flüssigkeit aufweist.

Aufgabe der Erfindung ist es, eine verbesserte Vorrichtung mit einer Einrichtung zur Bewegung einer Flüssigkeit und ein Verfahren zum Bewegen einer Flüssigkeit unter Verwendung einer derartigen Vorrichtung anzugeben. Diese Aufgabe wird mit einer Vorrichtung mit den Merkmalen des Anspruchs 1 und durch ein Verfahren mit den Merkmalen des Anspruchs 14 gelöst. Bevorzugte Ausgestaltungen und weiterführenden Details der Erfindung sind in den Unteransprüchen angegeben.

Die Vorrichtung umfasst eine Einrichtung zur Bewegung einer Flüssigkeit mit mindestens einem piezoakustischen Resonatorelement und zwei an der piezoelektrischen Schicht anliegenden Elektroden, wobei das piezoakustische Resonatorelement derart beschaffen ist, dass durch Anlegen einer Spannung mittels der Elektroden an die piezoelektrische Schicht eine Volumenschwingung der piezoelektrischen Schicht mit Resonanzfrequenz angeregt wird, die sich in die Flüssigkeit überträgt.

Derartige piezoakustische Resonatorelemente sind als so genannte BAW (bulk acoustic ware -Resonatoren aus der Technik bekannt und sind als passive Komponenten für Hochfrequenzanwendungen, zum Beispiel in der Mobilfunktechnologie, entwickelt worden.

Im Unterschied zu Oberflächenwellenresonatoren (SAW - Surface Acoustic Wave Resonator) wird bei den BAW-Resonatoren eine akustische Volumenschwingung (Körperschallschwingung) der piezoelektrischen Schicht angeregt und keine Oberflächenwelle. Je nach Konfiguration des piezoakustischen Resonators kann es sich bei der angeregten Volumenschwingung des piezoakustischen Resonatorelements um eine longitudinale Schwingung und/oder eine Volumenscherschwingung handeln. Beispielsweise lässt sich bei senkrechter kristallographischer Orientierung der c-Achse eines hexagonalen piezoelektrischen Materials z.B. PZT (Bleizirkonattitanat) bei unterseitiger und oberseitiger Anordnung der Elektroden (Sandwich-Struktur) eine longitudinale Schwingung entlang der Schichtdicke der piezoelektrischen Schicht erzielen. Hingegen kann eine Volumenscherschwingung entlang der lateralen Ausdehnung der piezoelektrischen Schicht erzeugt werden, indem die polykristalline Schicht derart orientiert ist, dass die c-Achse in der Schichtebene verläuft.

Vorzugsweise arbeitet das piezoakustische Resonatorelement der erfindungsgemäßen Vorrichtung derart, dass eine longitudinale Schwingung angeregt wird. Vorzugsweise arbeitet das piezoakustische Resonatorelement im Frequenzbereich von 0,5 bis 10 GHz, wobei eine in der Flüssigkeit stark gedämpfte Welle generiert wird, die zur Durchmischung der Flüssigkeit führt.

Bezüglich der Miniaturisierbarkeit liegt ein besonderer Vorteil der erfindungsgemäßen Vorrichtung darin, dass sie in einfachster Weise mit einem Sensor zur Detektion einer Substanz über dieselbe Technologieplattform integriert werden kann. Bei einer derartigen Einrichtung zur Detektion einer Substanz kann es sich um einen Sensor handeln, der bestimmte Substanzen aus einem Gemisch detektiert, aber auch beispielsweise einen Massensensor.

Die Sensorfunktion durch Detektion der Anlagerung einer bestimmten Substanz kann die selektive Bestimmung dieser Substanz aus einem Substanzgemisch, die Bestimmung der Konzentration der entsprechenden Substanz, die Bestimmung der Masse, der Reaktionskinetik, etc. umfassen.

Sensoren dieser Art basierend auf einem piezoakustischen Volumenresonator sind aus der Technik bekannt. Beispielsweise beschreibt die Anmeldung WO 2004/017063 A2 der Anmelderin einen derartigen Mikrosensor zur Messung der Anlagerung einer Substanz an der Oberfläche des BAW-Resonators. Durch die Anlagerung der Substanz ändert sich die Resonanzfrequenz des BAW-Resonators, so dass hieraus auf die Anlagerung der Substanz geschlossen werden kann. Eine derartige Einrichtung zur Detektion einer Substanz weist einen Oberflächenabschnitt auf, der für die Anlagerung der zu detektierenden Substanz eingerichtet ist und für unterschiedliche zu detektierende Substanzen unterschiedlich beschaffen sein kann.

Durch Kombination bzw. Integration der Funktionen der erfindungsgemäßen Vorrichtung zum Bewegen einer Flüssigkeit mit einer Einrichtung zur Detektion einer Substanz können neue Anwendungsgebiete erschlossen werden. Zum Beispiel wird das Monitoring von Mikroreaktionen ermöglicht, indem gleichzeitig Reaktionsprodukte erfasst werden können. Da Sensorelement und Aktorelement als integrierte Halbleiterbauelement auf dem gleichen Chip realisiert werden, kann die Vorrichtung auf kleinstem Raum realisiert werden, wodurch wesentlich geringere Volumina der Reagenzien benötigt werden, was in vielen Fällen eine deutliche Kosteneinsparung mit sich bringt. Weiterhin wird die Möglichkeit eröffnet, Arrays mit mehreren Elementen herzustellen, die es gestatten, unterschiedliche Tests parallel durchzuführen.

Die Vorrichtung kann dabei eine Mehrzahl an piezoakustischen Resonatoren mit unterschiedlichem Schwingungsmode bei Anregung umfassen. Beispielsweise ist es möglich, ein erstes piezoakustisches Resonatorelement mit Dickenresonanzmode und ein weiteres Resonatorelement mit Scherschwingungsmode vorzusehen. Die Vorrichtung kann dabei derart ausgestaltet sein, dass die beiden piezoakustischen Resonatorelemente mit unterschiedlichen Antriebseinrichtungen angesteuert werden, d. h. einzeln betrieben werden.

Erfindungsgemäß sind die beiden piezoakustischen Resonatorelemente in Stapelform übereinander angeordnet. Dabei kann das obere Resonatorelement als Sensorelement ausgebildet sein und vorzugsweise eine Dicke aufweisen, die λ/2 beträgt. In diesem Fall kann das obere Element für die akustische Welle wie ein Anti-Reflection-Coating wirken, was beim Mischen eine besonders effiziente Energieübertragung in die Flüssigkeit erlaubt.

Vorzugsweise umfasst die Einrichtung mehrere piezoakustische Resonatorelemente, die gegenphasig angesteuert werden. Hierdurch können auch größere Flüssigkeitsvolumen durchmischt werden, da durch die gegenphasige Ansteuerung eine Verwirbelung in der Flüssigkeit und eine bessere Durchmischung erzielt wird.

Vorzugsweise beträgt die Größe des piezoakustischen Resonatorelements der erfindungsgemäßen Einrichtung 50 bis 200 µm. Ein wesentlicher Vorteil gegenüber bestehenden Lösungen ist das erhöhte Potential zur Miniaturisierung, wodurch die Größe des gesamten Mikrofluidik-Systems stark begrenzt werden kann.

Die Einrichtung zur Bewegung einer Flüssigkeit gemäß der vorliegenden Erfindung kann als Misch- und/oder als Pumpeinrichtung ausgebildet sein. Als Mikropumpe kann sie beispielsweise auf einer Membran angeordnet sein, die durch Ansteuerung des piezoakustischen Resonatorelements eine Biegeauslenkung erfährt. Vorteilhafterweise beträgt die Dicke eines piezoakustischen Resonatorelements eine halbe Wellenlänge (λ/2).

Die Vorrichtung kann als Modul ausgebildet sein. Das Modul kann derart ausgebildet sein, dass es in ein Mikrofluidik-System integrierbar ist, z.B. durch einfaches Einschieben oder Einstecken.

Bei einer einfachen Ausgestaltung des piezoakustischen Resonatorelements ist dieses auf einem akustischen Spiegel angeordnet, der mehrere Lagen mit stark unterschiedlicher akustischer Impedanz umfasst. Das piezoakustische Resonatorelement kann jedoch auch auf einer Dünnschicht-Membran angeordnet sein, die beispielsweise durch Rückseiten-Ätzung eines Si-Wafers mit beispielsweise einer nitridischen oder oxidischen Deckschicht als Ätzstopp hergestellt werden kann. Dabei kann die Vorrichtung als Mikropumpe ausgestaltet sein, wobei die Membran durch Ansteuerung des piezoakustischen Resonatorelements eine Biegeauslenkung erfährt, deren Schwingung in die Flüssigkeit übertragen wird.

Eine verbesserte Pumpenleistung lässt sich erzielen, wenn die Vorrichtung mehrere piezoakustische Resonatorelemente umfasst, die gegenphasig angesteuert werden. Bei einer besonders vorteilhaften Ausgestaltung ist die Vorrichtung als Multi-Membran-Gegenkontaktpumpe ausgebildet, wobei in einem Strömungskanal in Flussrichtung hintereinander mehrere piezoakustische Resonatorelemente als Aktoren (Pumpen) vorgesehen sind und zwischen zwei der piezoakustischen Resonatorelemente eine Rückflussbarriere angeordnet ist.

Besondere Vorteile ergeben sich durch die Integrationsfähigkeit der erfindungsgemäßen Vorrichtung, die eine Einrichtung zur Bewegung einer Flüssigkeit aufweist, die in einfacher Weise als Dünnschichtbauteil auf einem Halbleitersubstrat integriert sein kann. Dabei können die üblichen Verfahrensprozesse der Halbleitertechnologie genutzt werden, wie zum Beispiel die Bipolar, CMOS- oder BiCMOS-Technologie.

Die Vorrichtung kann auf einem Hochfrequenzsubstrat durch Flip-Chip-Montage befestigt sein. Das HF-Substrat kann Teil eines Moduls sein, das in einfacher Weise in das Gehäuse einer Flusszelle integriert werden kann. Bei dem Hochfrequenzsubstrat handelt es sich vorzugsweise um ein LTCC (Low Temperature Cofired Ceramics)-Substrat.

Bei einer besonders effizienten und stark miniaturisierten erfindungsgemäßen Vorrichtung handelt es sich um eine MEMS (Microelectronic Mechanical Systems)-Pumpe mit integriertem Biosensor. Diese umfasst ein erstes piezoakustisches Resonatorelement, das bei Ansteuerung eine Biegeauslenkung einer Membran verursacht. Zudem ist ein zweites piezoakustisches Resonatorelement vorgesehen, das gegenphasig betrieben wird. Die beiden piezoakustischen Resonatorelemente sind innerhalb eines Strömungskanals einer Flusszelle hintereinander folgend angeordnet. Dazwischen befindet sich eine Rückfluss-Barriere in der Flusszelle. Auf der Oberseite der beiden piezoakustischen Resonatorelemente, die als Pumpe wirken, ist jeweils eine Einrichtung zur Detektion einer Substanz vorgesehen mit einer entsprechenden Beschichtung zur Anlagerung einer Substanz, die detektiert werden soll.

Auf diese Weise lassen sich durch die erfindungsgemäße Vorrichtung die Kombinationen Sensor und Mischelement bzw. Sensor und Pumpenelement als Beispiele für ein Mikrosystemtechnik-Bauelement realisieren, das mehreren Funktionen dient. Die erheblich reduzierte Baugröße eröffnet neue Anwendungsbereiche und reduziert die Herstellungskosten.

Aufgrund der Siliziumkompatibilität der piezoakustischen Resonatorelemente ist auch die Ausgestaltung als ein Lab-on-a-Chip-System möglich, da es entsprechende Misch- und Sensorfunktionen mit entsprechenden integrierten Auswerteeinrichtungen vereint.

Die Erfindung ist jedoch nicht auf derartige Ausführungsformen beschränkt und stellt ebenfalls eine Einrichtung mit mindestens einem piezoakustischen Resonatorelement bereit, das derart aufgebaut ist, dass durch Ansteuerung der Elektroden dieses einen piezoakustischen Resonatorelements eine longitudinale Volumenschwingung und gleichzeitig eine Schermode-Volumenschwingung der piezoelektrischen Schicht anregbar sind.

Ein derartiges piezoakustisches Resonatorelement lässt sich durch gezielte Auswahl der kristallographischen Orientierung der piezoelektrischen Schicht erzielen. Beispielsweise kann es sich um eine piezoelektrische Schicht bestehend aus ZnO handeln, deren kristallographische c-Achse in geeigneter Weise verkippt ist. Beispielsweise kann die Verkippung 16° betragen. Neben ZnO kann beispielsweise auch AlN oder PZT (Bleizirkonattitanat) mit geeigneter Verkippung Verwendung finden. Bei einer derartigen Konfiguration wird mit einem piezoakustischen Resonatorelement die Flüssigkeit bewegt und gleichzeitig gemessen. Dementsprechend werden Sensor- und Aktorfunktion mit einem piezoakustischen Resonatorelement bereitgestellt.

Bei dieser Ausführungsform mit piezoakustischem Resonatorelement, das gleichzeitig als Sensor und Aktor fungiert, können sowohl longitudinale Moden als auch Schermoden mit vergleichbarer Stärke angeregt werden. Bei longitudinalen Moden lassen sich Flüssigkeiten mischen, da dieser Mode sehr gut in die Flüssigkeit einkoppelt. Mit Schermoden lassen sich beispielsweise gravimetrische Messungen als Beispiel für die Detektion einer Substanz durchführen.

Auch im Hinblick auf die Herstellungsprozesse ergeben sich bei einer derartigen Ausgestaltung erhebliche Vorteile, da lediglich ein piezoakustisches Resonatorelement prozessiert werden muss. Da dies mit Standard-Halbleiter-Prozessen erfolgen kann, ist eine Integration mit weiteren funktionalen Einheiten, wie z. B. Oszillator, Auswerteschaltkreis, etc. problemlos möglich. Es werden keine beweglichen Teile sowie keine Membranen oder Kantilever benötigt, was einfache Herstellungsprozesse als auch eine höhere Zuverlässigkeit der resultierenden Vorrichtung mit sich bringt.

Durch die Kombination der beiden Funktion Aktor/Sensor in einem Bauelement wird die Miniaturisierung weiter vorangetrieben und es können Mikrofluidik-Komponenten bereitgestellt werden, deren äußere Abmessungen deutlich unter 100 µm, vorzugsweise unterhalb 50 µm liegen.

Die Erfindung stellt auch ein Verfahren zum Bewegen einer Flüssigkeit unter Verwendung einer erfindungsgemäßen Vorrichtung bereit. Das Verfahren umfasst die Schritte: In-Kontaktbringen der Einrichtung zur Bewegung einer Flüssigkeit der erfindungsgemäßen Vorrichtung mit einer Flüssigkeit und Anregung einer Volumenschwingung der piezoelektrischen Schicht in Resonanz.

Beispielhafte Ausgestaltungen und Einzelheiten der vorliegenden Erfindung werden im Folgenden unter Bezugnahme auf die Figuren beschrieben.
- Fig. 1: zeigt ein erstes Ausführungsbeispiel einer Einrichtung zur Bewegung einer Flüssigkeit mit piezoakustischem Resonatorelement schematisch im Querschnitt.
- Fig. 2: zeigt ein zweites Ausführungsbeispiel einer Einrichtung zur Bewegung einer Flüssigkeit mit piezoakustischem Resonatorelement schematisch im Querschnitt.
- Fig. 3: zeigt ein Ausführungsbeispiel einer erfindungsgemäßen Vorrichtung, die als Mikromischer ausgestaltet ist, schematisch im Querschnitt.
- Fig. 4: zeigt ein weiteres Ausführungsbeispiel einer erfindungsgemäßen Vorrichtung, die aus Sensorelementen und Aktorelementen besteht und als Array ausgebildet ist, schematisch in einer Draufsicht.
- Fig. 5: zeigt ein weiteres Ausführungsbeispiel einer erfindungsgemäßen Vorrichtung mit mehreren piezoakustischen Resonatorelementen in Stapelanordnung schematisch im Querschnitt.
- Fig. 6: zeigt ein Ausführungsbeispiel einer erfindungsgemäßen Vorrichtung, das als MEMS-Pumpe mit integrierten Sensorelementen ausgebildet ist, schematisch im Querschnitt.
- Fig. 7: zeigt ein weiteres Ausführungsbeispiel einer erfindungsgemäßen Einrichtung zur Bewegung einer Flüssigkeit schematisch im Querschnitt.
- Fig. 8: zeigt die Amplitude S11 in Abhängigkeit der Frequenz, gemessen an dem piezoakustischen Resonatorelement der Fig. 8.
- Fig. 9: zeigt die Messung der Resonanzfrequenz in Abhängigkeit der Zeit für die Anbindung von Avidin, gemessen im Schermode bei 790 MHz.
- Fig. 10: zeigt einen Verfahrensablauf eines Ausführungsbeispiels eines Verfahrens zur Bewegung einer Flüssigkeit.

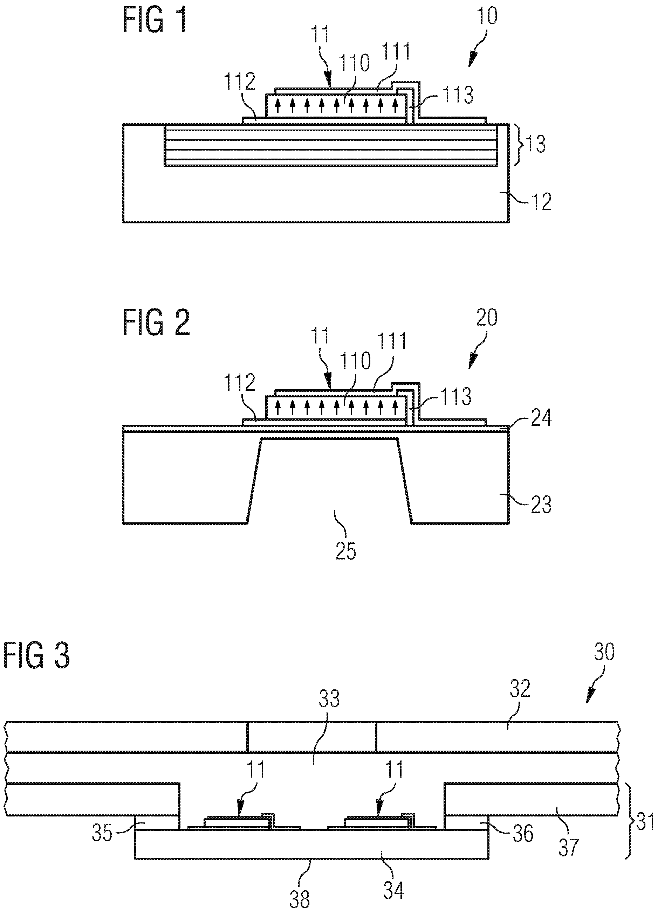

Unter Bezugnahme auf die Fig. 1 und 2 werden im Folgenden zwei grundsätzliche Strukturen einer erfindungsgemäßen Einrichtung zur Bewegung einer Flüssigkeit vorgestellt.

Fig. 1 zeigt ein erstes Ausführungsbeispiel einer Vorrichtung mit einer Einrichtung zur Bewegung einer Flüssigkeit, bei der das piezoakustische Resonatorelement auf einem Trägersubstrat angeordnet ist.

Die Vorrichtung 10 umfasst ein piezoakustisches Resonatorelement 11, das auf einem Si-Wafer als Substrat 12 angeordnet ist. Das piezoakustische Resonatorelement 11 umfasst eine piezoelektrische Schicht 110, bestehend aus PZT mit einer Schichtdicke von 1 µm. Auf der Oberseite bzw. der Unterseite der piezoelektrischen Schicht 110 sind Elektroden 111 bzw. 112, bestehend aus Platin mit einer Schichtdicke von 500 nm, angebracht. Zwischen den Elektroden 111, 112 ist eine Isolierung 113 aus Al₂O₃ vorgesehen. Die untere Elektrode 112 ist auf einem akustischen Spiegel 13 bestehend aus mehreren wechselnden Lagen mit stark unterschiedlicher akustischer Impedanz angeordnet. Dabei kann es sich beispielsweise um W/SiO₂-Lagen handeln. Dieser als Bragg-Reflektor fungierende akustische Spiegel dient der Vermeidung akustischer Verluste in das Substrat 12. Die Schichtdicke der Einzellagen des Spiegels beträgt λ/4

Statt der Anordnung auf einem piezoakustischen Spiegel kann das piezoakustische Resonatorelement auch auf einer dünnen Membran angeordnet sein. Eine derartige Ausführungsform ist in Fig. 2 gezeigt. Gleiche Bezugszeichen wie in Fig. 1 bezeichnen gleiche Teile. Die Membran 24, auf der das piezoakustische Resonatorelement 11 angeordnet ist, besteht aus SiO₂. Die Membran 24 bildet eine Deckschicht auf dem Si-Wafer 23.

Die Prozessierung des Wafers zur Erstellung der Membran erfolgt über rückseitige Ätzung, in deren Folge durch Materialabtrag die rückseitige Ausnehmung 25 des Si-Wafers 23 gebildet wird. Die SiO₂-Schicht 24 fungiert dabei als Ätzstopp und bildet beim fertigen Bauteil die Membran.

Bei beiden Ausführungsbeispielen, die in Fig. 1 und 2 gezeigt sind, arbeitet der piezoakustische Dünnschichtresonator 11 im Dickenresonanzmode. Dabei ist die kristallographische Orientierung der piezoelektrischen Schicht eine <111> Orientierung. Dies hat den Vorteil, dass die resultierende Schwingung besonders gut in die Flüssigkeit übertragen werden kann, so dass ein effizientes Pumpen bzw. Mischen möglich ist.

In Fig. 3 ist ein schematischer Ausschnitt eines Querschnitts einer Ausführungsform gezeigt, bei der die erfindungsgemäße Vorrichtung als vollständiges Mikrofluidik-System ausgestaltet ist.

Das Mikrofluidik-System 30 umfasst ein Gehäuse, von dem in Fig. 3 ein Gehäuseabschnitt 32 gezeigt ist, das einen Strömungskanal 33 begrenzt. Durch diesen Strömungskanal 33 strömt eine Flüssigkeit, die in einem nicht gezeigten Abschnitt der Vorrichtung 30 analysiert werden soll. Zu diesem Zweck umfasst das Mikrofluidik-System ein Modul 31 zur Durchmischung der durch den Strömungskanal 33 strömenden Flüssigkeit. Dieses Modul 31 umfasst einen Mischerchip 38, auf dem in Strömungsrichtung hintereinander zwei piezoakustische Resonatorelemente 11 angeordnet sind, deren Aufbau den in den Fig. 1 und 2 beschriebenen piezoakustischen Resonatorelementen 11 gleicht, mit der Ausnahme, dass hier die äußeren Abmessungen der piezoakustischen Resonatorelemente 250 x 100 x 50 µm beträgt, mit einer Schichtdicke der piezoelektrischen Schicht von 30 µm. Der Mischerchip 38 ist an ein LTCC (Low Temperature Cofire Ceramics)-Substrat 37 über Flip-Chip-Technologie gebondet. Das LTCC-Substrat kann in bekannter Weise weitere passive elektronische Komponenten beinhalten. Dabei ist ein oberseitiger Teilabschnitt des Mischerchips 38 über sog. Lötbonds 35 mit dem Hochfrequenzsubstrat 37 verbunden. Die Lötbonds 35 bestehen aus einer Gold-Nickel-Legierung. Zudem ist ein Underfill 36 vorgesehen. Bei einem Underfill-Prozess zur Erstellung des Underfills 36 wird eine Materialraupe längs der Chipkante aufgebracht, wobei durch Kapillareffekt die Flüssigkeit unter den Chip fließt.

Der in Fig. 3 gezeigte Aufbau, bei dem der Mischerchip 38 direkt über Flip-Chip-Technik an ein Hochfrequenzsubstrat 37 gebondet ist, bringt mehrere Vorteile mit sich: Es entsteht ein Modul 31, das direkt in das Mikrofluidik-System integriert werden kann, so dass eine erhebliche Miniaturisierung und Integration erreicht werden kann. Im Hinblick auf die Hochfrequenztechnik bietet die Anbindung über Lötbonds an das HF-Substrat zudem den Vorteil, dass bei Frequenzen im Gigahertz-Bereich die durch Bonddrähte verursachten hohen inneren Verluste vermieden werden können.

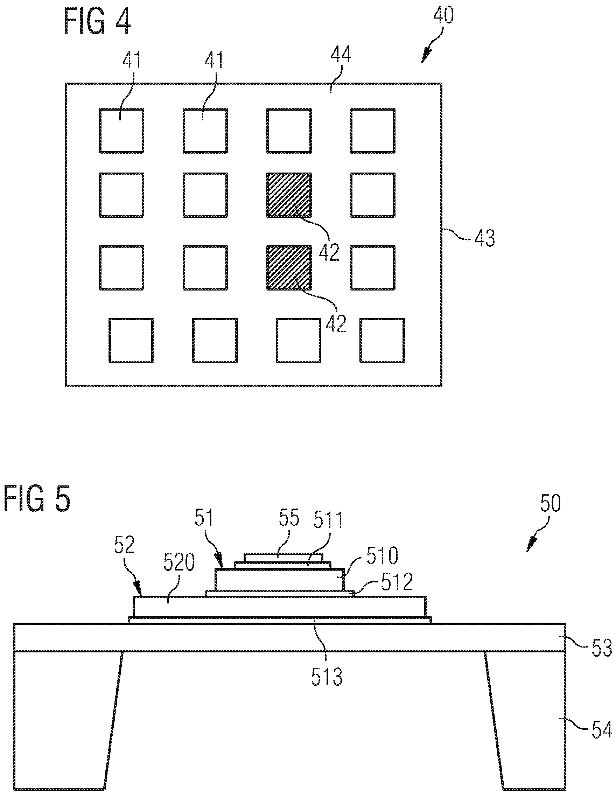

In Fig. 4 ist ein Ausführungsbeispiel der erfindungsgemäßen Vorrichtung gezeigt, bei der 4 x 4 piezoakustische Resonatorelemente 41, 42 auf einem Trägersubstrat 44 zu einem Array 40 angeordnet sind. Die piezoakustischen Resonatorelemente 41 sind dabei als Sensorelemente ausgebildet zur Detektion einer Substanz zur Identifizierung oder zur Ermittlung ihrer Konzentration durch Messung der angelagerten Masse. Ein grundsätzlicher Unterschied zwischen den piezoakustischen Resonatorelementen 41 und 42 besteht dabei in der unterschiedlichen Orientierung der piezoelektrischen Dünnschicht. Diese ist bei den piezoakustischen Resonatorelementen 42 so gewählt, dass ein longitudinaler Volumenschwinger resultiert, während es sich bei den Sensorelementen 41 um Scherschwinger handelt. Aufgrund der unterschiedlichen Orientierung der piezoelektrischen Schichten ist bei dem Array 40 für die Kombination von Sensorelementen 41 und Aktorelementen 42 eine weitere Strukturierungsebene erforderlich. Die Anordnung mehrerer Sensorelemente 41 zu einem Array ergibt den Vorteil einer erhöhten Ortsauflösung bei der Messung.

Bei der Kombination von Sensorelementen und Aktorelementen ist auch eine Stapelbauform möglich. Ein entsprechendes Ausführungsbeispiel ist in Fig. 5 gezeigt. Bei diesem Ausführungsbeispiel ist die erfindungsgemäße Vorrichtung als Dünnschichtmischer mit integriertem Biosensor ausgebildet. Die Vorrichtung 50 umfasst ein erstes piezoakustisches Resonatorelement 51, das als Sensorelement ausgestaltet ist. Es besteht aus einer piezoelektrischen Schicht 510 aus ZnO mit einer Schichtdicke von 1,5 µm. Auf der Oberseite und der Unterseite der piezoelektrischen Schicht 510 sind Elektroden 511 bzw. 512 mit einer Schichtdicke von 0,5 µm aufgebracht, die aus einer Ag/Pd-Legierung bestehen. Auf der Oberseite der oberen Elektrode 511 ist eine sensitive Beschichtung 55 aufgebracht. Bei dem vorliegenden Ausführungsbeispiel handelt es sich um eine spezielle Beschichtung mit DNA, die über das Schlüssel-Schloss-Prinzip ein Andocken einer korrespondierenden DNA zur selektiven Anlagerung aus einem Gemisch verschiedener Substanzen ermöglicht. Die piezoelektrische Schicht 510 weist eine Scherorientierung entsprechend der Sensorfunktion des piezoakustischen Resonatorelements 51 auf.

Das Sensorelement 51 ist bei diesem Ausführungsbeispiel in Stapelform auf einem Aktorelement 52 angeordnet. Das entsprechende piezoakustische Resonatorelement 52 besteht aus einer oberseitigen Elektrode 512 und einer unterseitigen Elektrode 513, die aus Ag/Pd bestehen. Die piezoelektrische Schicht 520 besteht aus AlN mit einer Schichtdicke von 500 nm. Die Länge des piezoakustischen Resonatorelements 52 beträgt 100 µm bei einer Breite von 50 µm. Das piezoakustische Resonatorelement 52, das als Aktor fungiert, ist auf einer Membran 53 eines Silizium-Wafers 54 angeordnet, der aus Siliziumnitrid besteht.

Durch die Anordnung in Stapelform kann eine weitere Miniaturisierung erreicht werden.

Statt dem Aufbau auf der Membran 53 kann auch ein Trägersubstrat mit akustischem Spiegel vorgesehen sein. Dieser ist so zu bemessen, dass die Reflexion sowohl für den Frequenzbereich der Volumen- als auch der Scherschwingung ausreicht.

Bei dem in Fig. 5 gezeigten Ausführungsbeispiel beträgt die Dicke des oberen Resonatorelements 51 λ/2. Hierdurch wirkt das obere Element für die akustische Welle wie ein Anti-Reflection-Coating, wodurch eine besonders effiziente Energieübertragung in die Flüssigkeit beim Mischen realisiert wird.

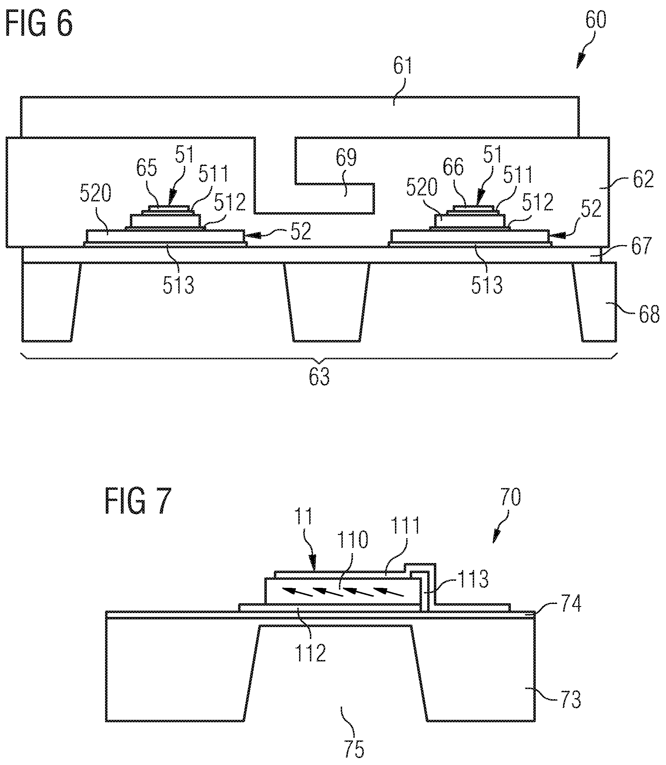

Fig. 6 zeigt ein Ausführungsbeispiel, bei dem die erfindungsgemäße Vorrichtung als MEMS (Microelectronic Mechanical Systems)-Pumpe mit integrierten Biosensoren ausgebildet ist.

Die Vorrichtung 60, von der in Fig. 6 ein Ausschnitt im Querschnitt gezeigt ist, umfasst eine Flusszelle 61, die oberseitig einen Kanal 62 begrenzt. Die Unterseite des Kanals 62 wird durch eine Gegenkontaktpumpe 63 mit integrierten Sensorelementen gebildet, die als Zwei-Membran-Gegenkontaktpumpe ausgebildet ist. Die Mikropumpe 63 umfasst zwei piezoakustische Resonatorelemente 52 mit einer piezoelektrischen Schicht 520 in Dickenorientierung, die längs des Strömungskanals 62 hintereinander angeordnet sind und gegenphasig angesteuert werden. Der Aufbau der piezoakustischen Resonatorelemente 52 entspricht dem der in Fig. 5 gezeigten piezoakustischen Resonatorelemente 52. Durch Ansteuerung der Elektroden 512 bzw. 513 wird eine Biegeauslenkung der Membran verursacht. Die beiden piezoakustischen Resonatorelemente 52 mit Aktorfunktion werden gegenphasig angesteuert. In dem Strömungskanal ist eine Rückflussbarriere 69 angeordnet, die mit dem Gehäuseabschnitt 61 der Flusszelle einstückig ausgebildet ist. Sie verhindert den Rückfluss der Flüssigkeit. Durch den bimorphen Aufbau wird eine Membranbiegeauslenkung mit Resonanzfrequenz im kHz-Bereich genutzt. Auf der Oberseite der piezoakustischen Resonatorelemente 52 ist analog zur Darstellung der Fig. 5 ebenfalls ein piezoakustisches Resonatorelement 51 angeordnet, das als Sensor arbeitet. Das stromaufwärtig angeordnete piezoakustische Resonatorelement 51 weist eine Beschichtung 66 auf, die aus einem Polymer besteht und zur Absorption bestimmter Kohlenwasserstoffe geeignet ist. Das stromabwärtige piezoakustische Resonatorelement 51 weist eine Beschichtung 65 auf, die aus einem anderen Polymer besteht, das selektiv bestimmte Biomoleküle adsorbiert. Im Unterschied zu den piezoakustischen Resonatorelementen 52, die als Pumpenelemente im kHz-Bereich arbeiten, arbeiten die piezoakustischen Resonatorelemente 51 im Gigahertz-Bereich.

Auch bei diesem Ausführungsbeispiel ist durch die Anordnung der piezoakustischen Resonatorelemente mit unterschiedlicher Funktion in Stapelbauweise eine erhebliche Miniaturisierung möglich, die es erlaubt, Mikrosystemtechnik-Bauelemente mit verschiedenen Funktionen in einem Bauelement zu realisieren.

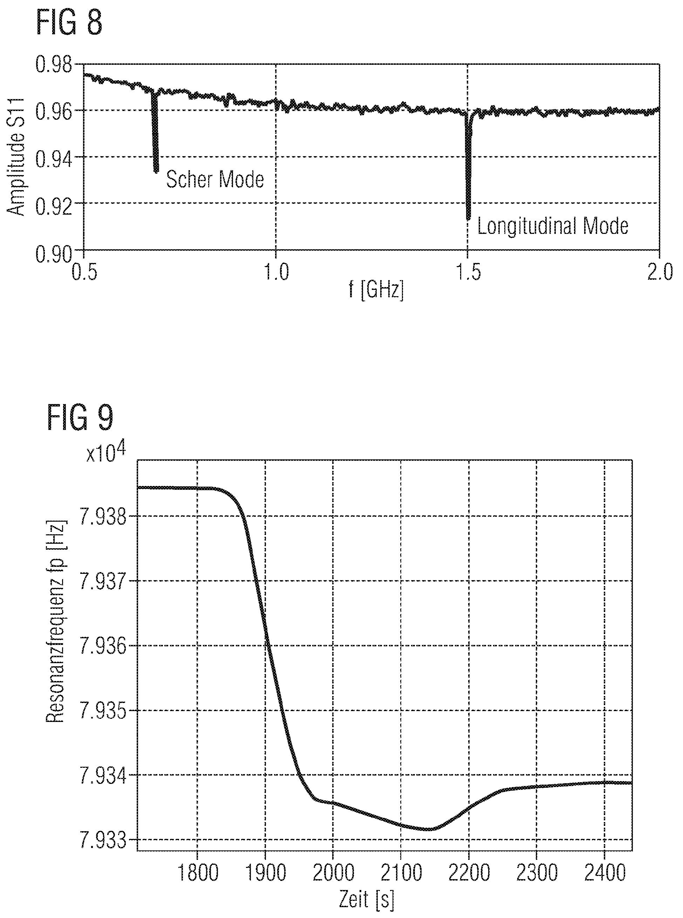

Ein nicht erfindungsgemäßes Ausführungsbeispiel beschreibt eine Vorrichtung mit einer Einrichtung, die ein piezoakustisches Resonatorelement umfasst, dessen piezoelektrische Schicht derart orientiert ist, dass durch Ansteuerung der Elektroden sowohl eine Volumenschwingung mit Longitudinalmode als auch eine Volumenschwingung mit Schermode anregbar sind. Eine Vorrichtung mit einer derart beschaffenen Einrichtung zur Bewegung einer Flüssigkeit ist in Fig. 7 gezeigt. Der Aufbau der in Fig. 7 gezeigten Vorrichtung 70 entspricht dem Aufbau der Fig. 2, mit dem Unterschied, dass bei dem Ausführungsbeispiel der Fig. 7 eine piezoelektrische Schicht, bestehend aus ZnO Verwendung findet mit einer kristallographischen Orientierung der c-Achse nahezu in Schichtebene der piezoelektrischen Schicht. Bei diesem Ausführungsbeispiel beträgt die Verkippung 16°. Bei einer derartigen Orientierung lassen sich sowohl longitudinale Moden als auch Schermoden mit vergleichbarer Stärke anregen, wie in Fig. 8 gezeigt. Mit Hilfe longitudinaler Moden lassen sich Flüssigkeiten auf dem Resonator mischen, da hier eine gute Einkoppelung in die Flüssigkeit gegeben ist. Mittels Schermoden lassen sich Sensorfunktionen realisieren. Beispielsweise zeigt Fig. 9 das Beispiel einer gravimetrischen Messung der Anbindung von Avidin, gemessen im Schermode bei 790 MHz. Dieses Ausführungsbeispiel bietet den Vorteil, dass mit nur einem piezoakustischen Resonatorelement gleichzeitig longitudinale Moden und Schermoden angeregt werden können, wodurch es möglich wird, in nur einem piezoakustischen Resonatorelement Aktor- und Sensorfunktion zu vereinen. Bei dem Ausführungsbeispiel der Fig. 7 wird das piezoakustische Resonatorelement mit einem Signalmixer betrieben, der in der Abbildung nicht gezeigt ist. Dieser Signalmixer überlagert entsprechende Frequenzen, die zur Anregung der entsprechenden Moden geeignet sind.

In Fig. 7 ist das piezoakustische Resonatorelement 701 auf einer Membran ausgebildet. Es kann jedoch beispielsweise ebenso der in Fig. 1 gezeigte Aufbau auf einem Trägersubstrat mit akustischem Spiegel verwendet werden.

Neben dem in Fig. 7 gezeigten Ausführungsbeispiel, bei dem die piezoelektrische Schicht aus ZnO besteht, können andere piezoelektrische Materialien, wie z. B. AlN, PZT, mit entsprechender geeigneter Verkippung verwendet werden. Bei piezoelektrischen Materialien mit hexagonaler Kristallstruktur liegt eine bevorzugte Orientierung in vielen Fällen im Bereich < 45°.

Verschiedene Modifikationen der oben beschriebenen Ausführungsbeispiele sind möglich, wobei einzelne Merkmale der verschiedenen Ausgestaltungen miteinander kombiniert oder ausgetauscht werden können. Soweit derartige Modifikationen für den Fachmann ohne weiteres ersichtlich sind, sollen sie durch die Beschreibung der erläuterten Ausführungsbeispiele implizit offenbart werden. Beispielsweise ist es möglich, in einem Array nicht nur Aktor- und Sensorfunktion zu kombinieren, sondern auch die Bauweise des piezoakustischen Resonatorelements derart zu variieren, dass einzelne piezoakustische Resonatorelemente dazu geeignet sind, gleichzeitig longitudinale und Schermoden anzuregen, und zusätzlich piezoakustische Resonatorelemente vorgesehen sind, die die entsprechenden Funktion als getrenntes Bauteil verwirklichen.

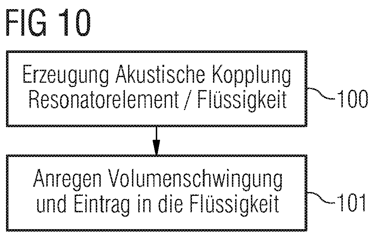

Bezug nehmend auf Fig. 10 wird im Folgenden ein Ausführungsbeispiel eines Verfahrens zum Bewegen einer Flüssigkeit unter Verwendung einer erfindungsgemäßen Vorrichtung beschrieben.

In Schritt 100 wird eine Flüssigkeit mit einer erfindungsgemäßen Vorrichtung in Kontakt gebracht, derart, dass eine Volumenschwingung des piezoakustischen Resonatorelements der erfindungsgemäßen Vorrichtung in die Flüssigkeit eingetragen werden kann. In Schritt 101 erfolgt das Bewegen der Flüssigkeit durch Anregung einer Volumenschwingung des piezoakustischen Resonatorelements, die sich zur Bewegung der Flüssigkeit in diese überträgt.

## Patentansprüche

1. Vorrichtung zur Detektion einer Substanz mit
- einer Einrichtung zur Bewegung einer Flüssigkeit, wobei die Einrichtung mindestens ein erstes piezoakustisches Resonatorelement (11,52) mit mindestens einer piezoelektrischen Schicht (110) und zwei an der piezoelektrischen Schicht (110) anliegenden Elektroden (111, 112) aufweist, wobei die piezoelektrische Schicht (110) in Sandwich-Bauweise zwischen den Elektroden (111, 112) angeordnet ist und die c-Achse der piezoelektrischen Schicht (110) senkrecht zur Schichtebene der piezoelektrischen Schicht (110) steht, so dass durch Anlegen einer Spannung mittels der Elektroden (111, 112) an die piezoelektrischen Schicht (110) eine longitudinale Volumenschwingung der piezoelektrischen Schicht (110) mit Resonanzfrequenz angeregt wird, die zur Bewegung in die Flüssigkeit übertragen wird, und
- einer Einrichtung zur Detektion einer Substanz, die mindestens ein zweites piezoakustisches Resonatorelement (51) mit mindestens einer piezoelektrischen Schicht und zwei an der piezoelektrischen Schicht anliegenden Elektroden aufweist, wobei die piezoelektrische Schicht in Sandwich-Bauweise zwischen den Elektroden angeordnet ist und die c-Achse der piezoelektrischen Schicht in der Schichtebene der piezoelektrischen Schicht verläuft, so dass durch Anlegen einer Spannung mittels der Elektroden an die piezoelektrischen Schicht eine Schermode-Volumenschwingung der piezoelektrischen Schicht mit Resonanzfrequenz angeregt wird, und einen Oberflächenabschnitt aufweist, der für die Anlagerung der zu detektierenden Substanz eingerichtet ist, wobei sich die Resonanzfrequenz des piezoakustischen Resonatorelements in Abhängigkeit der Masse der angelagerten, zu detektierenden Substanz ändert,
**dadurch gekennzeichnet, dass**
mindestens das erste und das zweite piezoakustische Resonatorelement (11) in Stapelbauweise übereinander angeordnet sind.

2. Vorrichtung nach Anspruch 1, **dadurch gekennzeichnet, dass** die Einrichtung zur Bewegung einer Flüssigkeit als Mischeinrichtung zur Durchmischung der Flüssigkeit ausgebildet ist mit einer Resonanzfrequenz im Frequenzbereich von 0,5 - 4 GHz.

3. Vorrichtung nach einem der vorhergehenden Ansprüche, **dadurch gekennzeichnet, dass** die Einrichtung zur Bewegung einer Flüssigkeit mehrere piezoakustische Resonatorelemente (11) aufweist.

4. Vorrichtung nach Anspruch 3, **dadurch gekennzeichnet, dass** die Einrichtung zur Bewegung einer Flüssigkeit derart beschaffen ist, dass die mehreren piezoakustischen Resonatorelemente (11) gegenphasig angesteuert werden.

5. Vorrichtung nach einem der vorhergehenden Ansprüche, **dadurch gekennzeichnet, dass** die Dicke von einem piezoakustischen Resonatorelement (11) λ/2 beträgt.

6. Vorrichtung nach einem der vorhergehenden Ansprüche, **dadurch gekennzeichnet, dass** mindestens ein piezoakustisches Resonatorelement (11) auf einer Membran (24) angeordnet ist.

7. Vorrichtung nach Anspruch 6, **dadurch gekennzeichnet, dass** die Einrichtung zur Bewegung einer Flüssigkeit als Mikropumpe eingerichtet ist, wobei die Membran (24) durch Ansteuerung des piezoakustische Resonatorelements (11) eine Biegeauslenkung erfährt.

8. Vorrichtung nach Anspruch 6 oder 7, **dadurch gekennzeichnet, dass** die Vorrichtung als Multi-Membran Gegenkontaktpumpe ausgebildet ist, mit mindestens zwei gegenphasig angesteuerten piezoakustischen Resonatorelementen (11).

9. Vorrichtung nach Anspruch 7 oder 8, **dadurch gekennzeichnet, dass** die als Mikropumpe ausgebildete Vorrichtung als Multi-Membran-Pumpe ausgestaltet ist, mit mindestens zwei in einem Kanal (62) in Flussrichtung hintereinander angeordneten piezoakustischen Resonatorelementen (11), wobei zwischen zwei piezoakustischen Resonatorelementen (11) eine Rückflussbarriere angeordnet ist.

10. Vorrichtung nach einem der vorhergehenden Ansprüche, **dadurch gekennzeichnet, dass** die Vorrichtung mindestens ein zusätzliches piezoakustisches Resonatorelement (11) umfasst, das derart aufgebaut ist, dass die angeregte Volumenschwingung piezoelektrischen Schicht (110) des piezoakustischen Resonatorelements (11) eine longitudinale Volumenschwingung ist.

11. Vorrichtung nach einem der vorhergehenden Ansprüche, **dadurch gekennzeichnet, dass** die Vorrichtung als Modul (31) ausgebildet ist, wobei die Einrichtung zur Bewegung einer Flüssigkeit auf einem HF-Substrat in Form eines LTCC (Low Temperature Cofired Ceramics)-Substrats angeordnet ist.

12. Vorrichtung nach einem der Ansprüche 1 bis 11 **dadurch gekennzeichnet, dass** das obere Resonatorelement (11) als Sensorelement der Einrichtung zur Detektion der Substanz ausgebildet ist, und eine Dicke aufweist, die λ/2 beträgt.

13. Verfahren zum Bewegen einer Flüssigkeit mit den Schritten In-Kontaktbringen der Flüssigkeit mit einem ersten piezoakustischen Resonatorelement (11) einer Vorrichtung nach einem der vorhergehenden Ansprüche, derart, dass die Volumenschwingung des piezoakustischen Resonatorelementes (11) in die Flüssigkeit übertragen werden kann (100), und Anregen einer Volumenschwingung mit Resonanzfrequenz des piezoakustischen Resonatorelements (11) zur Bewegung der Flüssigkeit (101), sowie Detektieren einer Substanz in der Flüssigkeit mittels eines zweiten piezoakustischen Resonatorelements der Vorrichtung.

## Claims

1. Apparatus for detecting a substance having
- a device for moving a liquid, wherein the device has at least one first piezoacoustic resonator element (11, 52) having at least one piezoelectric layer (110) and two electrodes (111, 112), which abut the piezoelectric layer (110), wherein the piezoelectric layer (110) is arranged in a sandwich structure between the electrodes (111, 112) and the c-axis of the piezoelectric layer (110) is at right angles to the layer plane of the piezoelectric layer (110), so that by applying a voltage to the piezoelectric layer (110) by means of the electrodes (111, 112) a longitudinal volume oscillation of the piezoelectric layer (110), which is transmitted to the liquid in order to move it, is excited at resonant frequency, and
- a device for detecting a substance, which has at least one second piezoacoustic resonance element (51) having at least one piezoelectric layer and two electrodes, which abut the piezoelectric layer, wherein the piezoelectric layer is arranged in a sandwich structure between the electrodes, and the c-axis of the piezoelectric layer runs in the layer plane of the piezoelectric layer so that by applying a voltage to the piezoelectric layer by means of the electrodes, a shear mode volume oscillation of the piezoelectric layer is excited at resonant frequency and has a surface section, which is designed for the accumulation of the substance to be detected, wherein the resonance frequency of the piezoacoustic resonator element changes as a function of the mass of the accumulated substance to be detected,
**characterised in that**
at least the first and the second piezoacoustic resonator element (11) are arranged in a stack construction one above the other.

2. Apparatus according to claim 1, **characterised in that** the device for moving a liquid is designed as a mixing device for mixing the liquid with a resonant frequency in the frequency range of 0.5 - 4 GHz.

3. Apparatus according to one of the preceding claims, **characterised in that** the device for moving a liquid has several piezoacoustic resonator elements (11).

4. Apparatus according to claim 3, **characterised in that** the device for moving a liquid is made in such a way that the several piezoacoustic resonator elements (11) are activated in anti-phase.

5. Apparatus according to one of the preceding claims, **characterised in that** the thickness of the piezoacoustic resonator element (11) is λ/2.

6. Apparatus according to one of the preceding claims, **characterised in that** at least one piezoacoustic resonator element (11) is arranged on a membrane (24).

7. Apparatus according to claim 6, **characterised in that** the device for moving a liquid is arranged as a micropump, wherein the membrane (24) undergoes a bending deflection as a result of activating the piezoacoustic resonator element (11).

8. Apparatus according to claim 6 or 7, **characterised in that** the apparatus is designed as a multi-membrane countercontact pump having at least two piezoacoustic resonator elements (11) activated in anti-phase.

9. Apparatus according to claim 7 or 8, **characterised in that** the apparatus designed as a micropump is designed as a multi-membrane pump having at least two piezoacoustic resonator elements (11) arranged in a flow channel (62) one behind the other in the direction of flow, a return flow barrier being arranged between two piezoacoustic resonator elements (11).

10. Apparatus according to one of the preceding claims, **characterised in that** the apparatus comprises at least one additional piezoacoustic resonator element (11), which is designed in such a way that the excited volume oscillation of the piezoelectric layer (110) of the piezoacoustic resonator element (11) is a longitudinal volume oscillation.

11. Apparatus according to one of the preceding claims, **characterised in that** the apparatus is designed as a module (31), the device for moving a liquid being arranged on an HF substrate in the form of an LTCC (Low Temperature Cofired Ceramics) substrate.

12. Apparatus according to one of claims 1 to 11, **characterised in that** the top resonator element (11) is designed as a sensor element of the device for detecting the substance and has a thickness, which is equal to λ/2.

13. Method for moving the liquid with the steps bringing the liquid into contact with a first piezoacoustic resonator element (11) of an apparatus according to one of the preceding claims in such a way that the volume oscillation of the piezoacoustic resonator element (11) can be transmitted (100) into the liquid, and excitation of a volume oscillation with resonant frequency of the piezoacoustic resonator element (11) for moving the liquid (101) and detecting a substance in the liquid by means of a second piezoacoustic resonator element of the apparatus.

## Revendications

1. Dispositif destiné à la détection d'une substance avec
- un système destiné au déplacement d'un liquide, le système présentant au moins un premier élément résonateur piézoacoustique (11, 52) avec au moins une couche piézoélectrique (110) et deux électrodes (111, 112) reposant sur la couche piézoélectrique (110), la couche piézoélectrique (110) étant disposée en sandwich entre les électrodes (111, 112) et l'axe c de la couche piézoélectrique (110) étant perpendiculaire au plan de couche de la couche piézoélectrique (110), de sorte que par le biais de l'application d'une tension au moyen des électrodes (111, 112) sur la couche piézoélectrique (110) une oscillation de volume longitudinale de la couche piézoélectrique (110) est impulsée avec une fréquence de résonance, qui est transférée dans le liquide en vue d'un mouvement, et
- un système destiné à la détection d'une substance, qui présente au moins un deuxième élément résonateur piézoacoustique (51) avec au moins une couche piézoélectrique et deux électrodes reposant sur la couche piézoélectrique, la couche piézoélectrique étant disposée en sandwich entre les électrodes et l'axe c de la couche piézoélectrique s'étendant dans le plan de couche de la couche piézoélectrique, de sorte que par le biais de l'application d'une tension au moyen des électrodes sur la couche piézoélectrique une oscillation de volume en mode de cisaillement de la couche piézoélectrique est impulsée avec une fréquence de résonance, et présente une section de surface qui est aménagée pour l'agglutination de la substance à détecter, la fréquence de résonance de l'élément résonateur piézoacoustique se modifiant en fonction de la masse de la substance agglutinée à détecter,
**caractérisé en ce que**
au moins le premier et le deuxième élément résonateur piézoélectrique (11) sont disposés l'un sur l'autre en formant une pile.

2. Dispositif selon la revendication 1, **caractérisé en ce que** le système destiné au déplacement d'un liquide est configuré en tant que système de mélange pour le mélange du liquide avec une fréquence de résonance dans la plage de fréquences de 0,5 à 4 GHz.

3. Dispositif selon l'une des revendications précédentes, **caractérisé en ce que** le système destiné au déplacement d'un liquide présente plusieurs éléments résonateurs piézoacoustiques (11).

4. Dispositif selon la revendication 3, **caractérisé en ce que** le système destiné au déplacement d'un liquide est fourni de telle sorte que les plusieurs éléments résonateurs piézoacoustiques (11) sont commandés en opposition de phases.

5. Dispositif selon l'une des revendications précédentes, **caractérisé en ce que** l'épaisseur d'un élément résonateur piézoacoustique (11) s'élève à λ/2.

6. Dispositif selon l'une des revendications précédentes, **caractérisé en ce qu'**au moins un élément résonateur piézoacoustique (11) est disposé sur une membrane (24).

7. Dispositif selon la revendication 6, **caractérisé en ce que** le système destiné au déplacement d'un liquide est aménagé en tant que micropompe, la membrane (24) étant soumise à une élongation par flexion par le biais de la commande de l'élément résonateur piézoacoustique (11).

8. Dispositif selon la revendication 6 ou 7, **caractérisé en ce que** le dispositif est configuré en tant pompe de contre-contact multimembrane, avec au moins deux éléments résonateurs piézoacoustiques (11) commandés en opposition de phases.

9. Dispositif selon la revendication 7 ou 8, **caractérisé en ce que** le dispositif configuré en tant que micropompe est conçu en tant que pompe multimembrane, avec au moins deux éléments résonateurs piézoacoustiques (11) disposés l'un derrière l'autre dans la direction d'écoulement dans un canal (62), une barrière antireflux étant disposée entre deux éléments résonateurs piézoacoustiques (11).

10. Dispositif selon l'une des revendications précédentes, **caractérisé en ce que** le dispositif comprend au moins un élément résonateur piézoacoustique (11) supplémentaire qui est conçu de telle sorte que l'oscillation de volume impulsée (11) de la couche piézoélectrique de l'élément résonateur piézoacoustique (11) est une oscillation de volume longitudinale.

11. Dispositif selon l'une des revendications précédentes, **caractérisé en ce que** le dispositif est configuré en tant que module (31), le système destiné au déplacement d'un liquide étant disposé sur un substrat HF en forme de substrat LTCC (céramique cofrittée basse température).

12. Dispositif selon l'une des revendications 1 à 11, **caractérisé en ce que** l'élément résonateur supérieur (11) est configuré en tant qu'élément capteur du système destiné à la détection de la substance, et présente une épaisseur qui s'élève à λ/2.

13. Procédé destiné au déplacement d'un liquide avec les étapes de mise en contact du liquide avec un premier élément résonateur piézoacoustique (11) d'un dispositif selon l'une des revendications précédentes, de telle sorte que l'oscillation de volume de l'élément résonateur piézoacoustique (11) puisse être transférée dans le liquide, et d'impulsion d'une oscillation de volume avec une fréquence de résonance de l'élément résonateur piézoacoustique (11) destiné au déplacement du liquide (101), ainsi que de détection d'une substance dans le liquide au moyen d'un deuxième élément résonateur piézoacoustique du dispositif.
